# EUROPEAN PATENT APPLICATION

(11) **EP 4 177 080 A1**
(43) Date of publication of application: **10.05.2023**
(21) Application number: 22198232.5
(22) Date of filing: 28.09.2022
(51) Int. Cl.: B60C 11/00, B60C 19/08

(54) **A TIRE**

(30) Priority: 03.11.2021 FI 20216131
(71) Applicant: Nokian Renkaat Oyj, 37101 Nokia (FI)
(72) Inventor: LAITILA, Aappo, 37101 Nokia (FI)
(74) Representative: Berggren Oy

(57) **Abstract**

The invention relates to a method for producing a tread (120) of a pneumatic tire (100), the pneumatic tire (100) comprising a first sidewall (145a), and a second sidewall (145b), wherein the tread has a ground contacting surface formed of tread portions (120a, 120b, 10). The method comprises: forming a first electrically conductive rubber layer (115), the first electrically conductive rubber layer (115) comprising first electrically conductive rubber material, winding a first uncured electrically low conductive rubber strip on a first area of the first electrically conductive rubber layer (115) in order to form at least part of a first uncured electrically low conductive tread portion, winding an uncured electrically conductive rubber strip (121) on a second area of the first electrically conductive rubber layer (115) in order to form an uncured electrically conductive tread portion, which extends to the ground contacting surface of the tread, which uncured electrically conductive tread portion comprises one or more than one layer of the uncured electrically conductive rubber strip, winding a second uncured electrically low conductive rubber strip on a third area of the first electrically conductive rubber layer (115) in order to form at least part of a second uncured electrically low conductive tread portion, and vulcanizing said windings, thereby obtaining the tread (120) of the pneumatic tire, the tread (120) comprising the electrically conductive tread portion (10), the first low conductive tread portion (120a), and the second low conductive tread portion (120b). The invention further relates to a pneumatic tire.

## Description

### Technical field

The invention relates to a pneumatic tire comprising an electrically conductive tread portion. The invention relates to a method for producing a tread of a pneumatic tire.

### Background

A wheel-rim mounting surface is conventionally provided in the bead region of the tire, which is designed to contact a rigid metal rim onto which the tire is mounted to create a tire-wheel assembly. The bead region of the tire normally includes at least one rubber component having a tire mounting surface, for example a chafer/toe guard component, which is designed to be rim-contacting, and therefore a mounting surface of the tire. The outer visible rubber layer of the tire sidewalls may be made of a rubber composition. The sidewalls may be reinforced with a rubber reinforcing carbon black content to be relatively electrically conductive. The tire further comprises a tread portion of a pneumatic tire, which is designed to provide a running surface of the tire for ground-contacting purposes.

### Summary

This invention relates to a pneumatic tire comprising an electrically conductive tread portion. Aspects of the invention are characterized by what is stated in the independent claims. Some preferred embodiments are disclosed in the dependent claims. These and other embodiments are disclosed in the description and figures.

The tire is preferably a pneumatic tire. The tire can be configured to rotate around an axis of rotation. The tire can comprise a circumferential tread which is configured to form a contact with a surface when the tire is used.

The tire may further comprise a circumferential belt layer disposed radially below the tread. Further, the tire can comprise a first bead region and a second bead region, which bead regions are spaced apart. The first bead region can have a first mounting surface and the second bead region can have a second mounting surface, which mounting surfaces can be adapted for mounting the tire on a rim of a wheel.

Still further, the tire can comprise a first sidewall typically extending between the first bead region and the tread, and a second sidewall typically extending between the second bead region and the tread.

Furthermore, the tire may comprise a carcass ply extending between the first bead region and the second bead region.

The tire can comprise a tread, of which a part may be formed by a tread block made of tread material. The tread may have a groove having a groove depth, the groove depth extending from a surface of the tread to the base of the groove. The tread can be configured to form a contact with a surface, such as a road, when the tire is used.

The tread can comprise an electrically conductive tread portion. The ground contacting surface of the tire can be formed from tread portions, which tread portions can comprise the electrically conductive tread portion and electrically low conductive tread portions.

Advantageously, the electrically conductive tread portion extends through the tread, i.e., from a first electrically conductive rubber layer, which can be disposed below the tread portions, to the ground contacting surface of the tire. Thus, resistance through the tread of the tire can be decreased.

Thus, the tread can be laterally divided into tread portions, wherein an electrically conductive tread portion can be left in between the low conductive tread portions.

Thus, the tire can comprise
- a first electrically conductive rubber layer disposed below the tread portions, the first electrically conductive rubber layer comprising or consisting of electrically conductive rubber material,
- a first electrically low conductive tread portion on a first area of the first electrically conductive rubber layer, the first low conductive tread portion extending from the first electrically conductive rubber layer to the ground contacting surface of the tread,
- an electrically conductive tread portion on a second area of the first electrically conductive rubber layer, the electrically conductive tread portion extending from the first electrically conductive rubber layer to the ground contacting surface of the tread,
- a second low conductive tread portion on a third area of the first electrically conductive rubber layer, the second low conductive tread portion extending from the first electrically conductive rubber layer to the ground contacting surface of the tread,
wherein the electrically conductive tread portion can be placed between the first low conductive tread portion and the second low conductive tread portion.

The electrically conductive tread portion may have a width in a range between 0.2 mm and 8 mm, preferably in a range between 0.4 mm and 7 mm, determined from the surface of the tread. Thus, it is possible to improve conductivity through the tread without affecting too much other properties of the tire. The width of the electrically conductive tread portion can be measured parallel to the width of the tire. Further, a width of the electrically conductive tread portion may vary. However, a minimum width of the electrically conductive tread portion may be at least 0.2 mm, preferably at least 0.4 mm, and most preferably at least 0.8 mm, and maximum width of the electrically conductive tread portion may be equal to or less than 8 mm, preferably equal to or less than 6 mm, and most preferably equal to or less than 5 mm.

The electrically conductive tread portion may be positioned to a normal direction, or substantially to a normal direction, with respect to the surface of the tread.

In an embodiment, the electrically conductive tread portion has an angle in a range between 5° and 90°, preferably in a range between 10° and 80°, more preferably in a range between 15° and 70°, and most preferably in a range between 20° and 60° with respect to the surface of the tread. Tread portions having said angle may be easier to manufacture than tread portions having other angle. Further, tread portions having said angle may have improved properties compared to tread portions having other angles. Thus, the electrically conductive tread portion may have an angle between 0° and 75° with respect to the normal direction.

The first low conductive tread portion, and the second low conductive tread portion can have a predetermined resistivity at 25°C. Said predetermined resistivity of the low conductive tread portions can be substantially greater than a predetermined resistivity of the electrically conductive tread portion.

The first electrically conductive rubber layer can be made of a first rubber material, and the electrically conductive tread portion can be made of a second rubber material. Said first rubber material may differ from said second rubber material. For example, hardness of the first rubber material may be smaller than hardness of the second rubber material. The second rubber material may wear similarly as the first and second low conductive tread portions. Thus, the electrically conductive tread portion may not substantially affect properties of the tire.

The electrically conductive tread portion may comprise at least one of the following:
- styrene butadiene rubber (SBR),
- butadiene rubber (BR), and
- natural rubber (NR).
Advantageously, a total amount of these materials is equal to or more than 15 wt.%, preferably equal to or more than 25 wt.%, more preferably equal to or more than 35 wt.%, and most preferably equal to or more than 40 wt.%, calculated from the total weight of the electrically conductive tread portion. Further, the total amount of these materials is preferably equal to or less than 70 wt.%, calculated from the total weight of the electrically conductive tread portion.

In an advantageous embodiment, the electrically conductive tread portion comprises carbon black. The carbon black can be used to improve electrical conductivity of a rubber material. For example oil absorption number (OAN) and specific surface area value of the carbon black have an effect of properties of carbon blacks.

In an embodiment, the electrically conductive tread portion comprises carbon black, the carbon black having an oil absorption number (OAN) in a range between 70 - 120 ml/100 g. The carbon black may have a specific surface area value of at least 70 m²/g, for example in a range between 70 m²/g and 100 m²/g, determined according to standard ASTM D6556-10.

In an embodiment, the amount of the carbon black can be equal to or more than 30 wt.%, preferably equal to or more than 40 wt.%, determined from the total weight of said electrically conductive tread portion. Further, the amount of the carbon black can be equal to or less than 60 wt.%, preferably in a range between 30 wt.% and 50 wt.%, determined from the total weight of said electrically conductive tread portion. In this embodiment, the carbon black may have an oil absorption number (OAN) in a range between 70-120 ml/100 g. Further, the carbon black may have a specific surface area value in a range between 70 m²/g and 100 m²/g, determined according to standard ASTM D6556-10.

In an embodiment, the electrically conductive tread portion comprises carbon black, wherein the amount of the carbon black can be equal to or more than 0.4 wt.%, preferably equal to or more than 2 wt.%, and most preferably equal to or more than 3 wt.%, determined from the total weight of said electrically conductive tread portion. Further, in this embodiment, amount of the carbon black can be equal to or less than 10 wt.%, preferably in a range between 1 wt.% and 10 wt.%, determined from the total weight of said electrically conductive tread portion. In this embodiment, the carbon black may have an oil absorption number (OAN) in a range between 70-120 ml/100 g. Further, a specific surface area value, determined according to standard ASTM D6556-10, may be equal to or more than 120 m²/g.

The first electrically conductive rubber layer may comprise or be made of material(s) selected from a group comprising elastomers (like SBR, BR, NR), fillers (like silica and/or carbon black), silane (if silica present), vulcanization chemicals (or curing agents), resins, sulphur, oils, and antidegradants.

The first low conductive tread portion and/or the second low conductive tread portion may comprise or be made of material(s) selected from a group comprising elastomers (like SBR, BR, NR), fillers, silane, vulcanization chemicals or curing agents, resins, sulphur, oils, and antidegradants.

A method for producing a tread of a tire may comprise the following steps:
- forming a first electrically conductive rubber layer, the first electrically conductive rubber layer comprising electrically conductive rubber material,
- winding first uncured electrically low conductive rubber strip on a circumference of the first electrically conductive rubber layer in order to form at least part of a first uncured electrically low conductive portion,
- winding an uncured electrically conductive rubber strip on a circumference of the first electrically conductive rubber layer in order to form an uncured electrically conductive tread portion, the uncured electrically conductive tread portion extending to the ground contacting surface of the tread, which uncured electrically conductive tread portion comprises one or more than one layer of the uncured electrically conductive rubber strip,
- winding second uncured electrically low conductive rubber strip on a circumference of the first electrically conductive rubber layer in order to form at least part of a second uncured electrically low conductive portion, and
- vulcanizing the windings,
thereby obtaining the tread of the pneumatic tire, wherein the tread may have the electrically conductive tread portion between the first low conductive tread portion and the second low conductive tread portion.

The formed first electrically low conductive tread portion may extend to the ground contacting surface of the tread. Further, the first electrically low conductive tread portion may cover 20-79 % of the ground contacting area of the tread.

The formed second electrically low conductive tread portion may extend to the ground contacting surface of the tread. Further, the second electrically low conductive tread portion may cover 20-79 % of the ground contacting surface area of the tread.

The formed electrically conductive tread portion may cover from 0.05% to 8% of the ground contacting surface area of the tread, preferably from 0.1% to 7% of the ground contacting surface area of the tread, more preferably from 0.4% to 6% of the ground contacting surface area of the tread, and most preferably from 0.8% to 5% of the ground contacting surface area of the tread. Thus, the improved electrical conductivity may be obtained without substantially affecting other properties of the tire.

The formed electrically conductive tread portion can extend to the ground contacting surface of the tread.

In an embodiment, the uncured electrically conductive rubber strip is a continuous body having:
- a width in a range between 4 mm and 50 mm, preferably in a range between 7 mm and 35 mm, and
- a thickness in a range between 0.2 mm and 5 mm, preferably in a range between 0.4 mm and 3 mm.
If the electrically conductive tread portion comprises at least two layers of the electrically conductive rubber strip, said width of the uncured electrically conductive rubber strip is preferably equal to or less than 50 mm, more preferably equal to or less than 40 mm, and most preferably equal to or less than 35 mm, such as in a range between 7 mm and 35 mm.

Shape of the electrically conductive rubber strip may be one of:
- irregular quadrilateral with no parallel sides,
- quadrilateral having at least one pair of parallel sides,
- parallelogram,
- rhombus,
- hexagon,
- pentagon,
- irregular quadrilateral having rounded edges,
- quadrilateral having rounded edges and at least one pair of parallel sides,
- parallelogram having rounded edges,
- rhombus having rounded edges,
- oval, and
- circular.

Preferably, the shape of the electrically conductive rubber strip is one of:
- irregular quadrilateral, optionally having rounded edges,
- quadrilateral having at least one pair of parallel sides and rounded edges,
- parallelogram, optionally having rounded edges,
- rhombus, optionally having rounded edges, and
- pentagon, optionally having rounded edges.
Technical effects of said shapes include improved processability and easiness of manufacturing process, including improved cross sectional filling ratio.

The electrically conductive tread portion is formed of at least one layer of the electrically conductive rubber strip. The electrically conductive tread portion may be formed of only one layer of the electrically conductive rubber strip.

Preferably, the electrically conductive tread portion is formed of at least two layers of the electrically conductive rubber strip. The electrically conductive tread portion preferably comprises at least two layers and equal to or less than 4 layers of the electrically conductive rubber strip. Advantageously, the electrically conductive tread portion is formed of 2-4 layers of the electrically conductive rubber strip. By using 2-4 layers of the electrically conductive rubber strip, adjustability of the conductivity can be improved. Further, width of the strip can be decreased, which can decrease manufacturing costs of the electrically conductive tread portion. Still further, the electrically conductive tread portion can be thin but reliable in use. Furthermore, a position of the electrically conductive tread portion can be easily controlled due to this embodiment.

In a preferred embodiment, the electrically conductive tread portion is formed by using at least two layers of the electrically conductive rubber strip. In this embodiment, each layer of the electrically conductive rubber strip on top of previous layer is preferably overlapping said previous layer so that an overlapped width is equal to or less than 50 %, preferably equal to or less than 40 %, more preferably equal to or less than 30 %, and most preferably equal to or less than 20 % calculated from a total width of the electrically conductive rubber strip. Further, each layer of the electrically conductive rubber strip on top of previous layer is preferably overlapping said previous layer so that an overlapped width is equal to or more than 1 %, preferably equal to or more than 3 %, more preferably equal to or more than 5 %, and most preferably equal to or more than 10 % calculated from a total width of the electrically conductive rubber strip. Thanks to said overlapping of the layers, adjustability of the conductivity can be improved. Further, thanks to this embodiment, width of the strip can be decreased, which can decrease manufacturing costs of the electrically conductive tread portion. By using a predetermined overlapping, conductivity of the electrically conductive tread portion can be controlled. If the electrically conductive tread portion is made of two layers of the electrically conductive strip, the electrically conductive tread portion can have greatest thickness in the middle of the electrically conductive tread portion due to the overlapped area of the strip. Further, properties of the tread can be improved by using this solution. For example, the electrically conductive tread portion can be thin but still reliable in use. Still further, a thickness, a position, an elasticity, and a conductivity of the electrically conductive tread portion can be controlled due to this embodiment. The greatest width of the electrically conductive tread portion can typically be determined from the area wherein strips are overlapping each other.

The electrically low conductive tread portions may comprise one or more than one material layer. In an embodiment, the electrically low conductive tread portions have been made of two material layers. The electrically low conductive tread portions may have been made of by winding rubber strips.

Thus, as discussed, the tread can comprise a first low conductive tread portion, a second low conductive tread portion, and an electrically conductive tread portion. The tire can further comprise a first electrically conductive rubber layer, which may be disposed below said tread portions.

The electrically conductive tread portion may be directly in contact with the first electrically conductive rubber layer. The first electrically conductive rubber layer may comprise or consist of one or two of the following:
- a base rubber layer,
- a breaker rubber layer,
- a tread under-cushion rubber layer, and
- a capstrip rubber layer.
In an embodiment, the first electrically conductive rubber layer is the base rubber layer or the capstrip layer. In an embodiment, the tire does not have the tread under-cushion rubber layer. In another embodiment, the tire comprises the tread under-cushion rubber layer on the capstrip rubber layer. In an embodiment, the tire does not have the base rubber layer and/or the capstrip layer, and the first electrically conductive rubber layer is, for example, the tread under-cushion rubber layer or the breaker rubber layer.

In an embodiment, the tire comprises wing layers. In this embodiment, a first wing layer may be connected to a first sidewall of the tire, and a second wing layer may be connected to a second sidewall of the tire. Thus, the tire may comprise wing layers, which wing layers are forming part of the sidewalls of the tire. The wing layers are preferably extending to the tread of the tire. A usage of the wing layers may improve strength of the tire as well as handling properties of the tire.

Thanks to the novel solution, the tread portion can be laterally divided into inside and outside tread layers having an electrically conductive tread portion between said layers, wherein the electrically conductive tread portion can be arranged to discharge static electricity of the tire to the ground.

Further, thanks to the present solution, it is possible to improve electrical conductivity of the tire without substantially affecting other properties of the tire. Further, the electrically conductive tread portion can have suitable fatigue resistance.

### Brief description of the drawings

- Figs 1a-b: illustrates an example of a tire comprising at least one electrically conductive tread portion,
- Fig. 2: illustrates, in a half cross section, an example of a tire comprising at least one electrically conductive tread portion,
- Figs 3a-f: illustrates, in a half cross section of a part of a tire, an example location of an electrically conductive tread portion,
- Figs 4a-f: illustrates, in a half cross section of a part of a tire, an example location of layers of an electrically conductive rubber strip, and
- Fig. 5: shows a half cross section of a part of a tread.

The Figures are intended to illustrate the general principles of the disclosed solution. Therefore, the illustrations in the Figures are not necessarily in scale or suggestive of precise layout of system components.

### Detailed description

In the text, references are made to the Figures with the following numerals and denotations:
- 10: electrically conductive tread portion,
- w10: width of the electrically conductive tread portion,
- 110: first length of the electrically conductive tread portion,
- 20: contact patch,
- 100: tire,
- 110: tread block,
- 114: tread pattern,
- 115: first electrically conductive rubber layer,
- 117: wing layer,
- 117a: first wing layer,
- 117b: second wing layer,
- 120: tread of tire,
- 120a: first low conductive tread portion,
- 120b: second low conductive tread portion,
- 121: an electrically conductive rubber strip,
- 121a: first layer of an electrically conductive rubber strip,
- 121b: second layer of an electrically conductive rubber strip,
- 130: inner surface of tire,
- 135: innerliner,
- 140: circumferential belt layer,
- 145: outer sidewall,
- 150: bead region,
- 151: first bead region,
- 152: second bead region,
- 155: carcass ply,
- 900: contact surface such as a road,
- AXR: axis of rotation of tire,
- SC: circumferential direction, and
- SR: radial direction

Figures disclose a tire, or at least a part of a tire, comprising an electrically conductive tread portion 10.

In this application, the term "phr" relates to parts by weight of an ingredient per 100 parts by weight of rubber, unless otherwise indicated.

In this application, the term "carbon black" is used to refer to rubber reinforcing carbon blacks unless otherwise indicated.

In this application, the term "SBR" refers to styrene butadiene rubber.

In this application, the term "BR" refers to butadiene rubber.

In this application, the term "NR" refers to natural rubber.

The term "tread portion" refers to a portion forming part of the tread the tire.

The term "low conductive tread portion" refers to an electrically low conductive tread portion.

The term "electrically conductive path" refers to an electrical path of least electrical resistance. The electrically conductive path can extend from a mounting surface of a rubber component in the first bead region 151 of the tire to the running surface 900 of the tire tread 120. In an embodiment, the electrical resistance of the tire between the tread 120 and the rim of the wheel may be, e.g., equal to or less than 10^9 Ω, preferably equal to or less than 0.5*10^9 Ω.

In this application, the term "surface tread portions" refers to the electrically low conductive tread portions 120a, 120b, and the electrically conductive tread portion 10.

In this application, a specific surface area value can be determined according to standard ASTM D6556-10.

In this application, the OAN value refers to an oil absorption number, determined according to standard ASTM D2414-09.

Resistivity may be determined, depending on an object and/or material to be measured, according to standard W.d.K 110 (Measurement of the Electrical Resistance of Tires), or according to standard ISO 2878:2017 (Rubber, vulcanized or thermoplastic, antistatic and conductive products, determination of electrical resistance).

The first and the second electrically low conductive tread portions may comprise one or more than one layer. In an embodiment, the electrically low conductive tread portions comprise 1 to 2 layers. In an embodiment, the first electrically low conductive tread portion comprises two layers, which layers can be made of different electrically low conductive materials. In an embodiment, the second electrically low conductive tread portion comprises two layers, which layers can be made of different electrically low conductive materials.

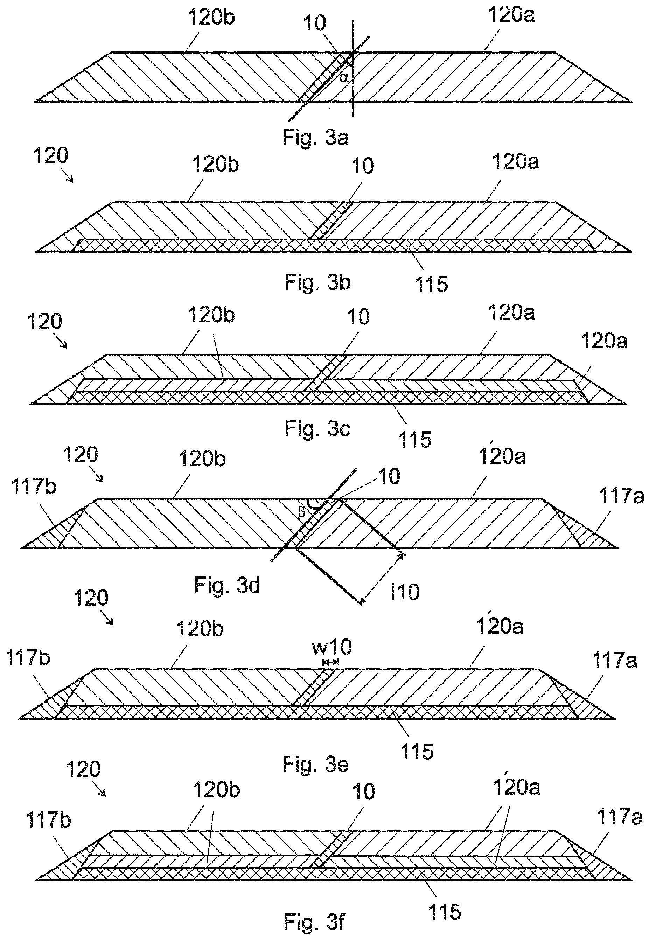

If the electrically low conductive tread portions comprise only one layer as shown e.g. in Fig. 3b, it can be manufactured cost-efficiently. If the electrically low conductive tread portions comprise two layers as shown e.g. in Fig. 3c, it is possible to improve some properties of a pneumatic tire, such as decrease rolling resistance of the tire.

The tire 100 can be a pneumatic tire. Such a tire may be, for example, a tire for a passenger motor vehicle, such as a passenger car or a motorcycle. Such a tire 100 may be, for example, a so-called heavy tire, for a heavy machine such as a truck, a caterpillar, a harvester, or a front loader. As is known, such a tire 100 may rotate around an axis of rotation AXR.

Such a tire 100 comprises a tread 120, which is in contact with a surface 900 such as a road surface during the normal use of the tire 100. Such a tread 120 typically comprises a tread pattern 114 which comprises a plurality of tread blocks 110. The tread rubber may be disposed radially outside the belt layer 140 to form the tread portion.

A surface of the tread may be formed of the tread portions, wherein the electrically conductive tread portion is left in between the electrically low conductive tread portions.

The tread can be configured to form a contact with a surface 900 when the tire 100 is used. An area of the contact of the tread 120 with the surface 900 forms a contact patch 20. Thus, the contact patch refers to a portion of a motor vehicle's tire 100 that is in contact with a surface 900. Thus, it is the portion of the tire's tread that touches the surface 900, such as a road. Typically, the contact patches of the tires 100 of the motor vehicle are the only connections between the road and the motor vehicle. The contact patch 20 can also be called as footprint of the tire. When the tire 100 is used, a path of increased electrical conductivity can be provided from the bead region to the surface 900 at least partly via the electrically conductive tread portion 10.

The tire may comprise a reinforcing belt, i.e., circumferential belt layer 140, which can be arranged to be between the inner surface of the tire 130 and the tread 120. Since the purpose of the reinforcing belt is to reinforce the tire, preferably, the reinforcing belt does not limit large apertures. More precisely, preferably, the reinforcing belt does not limit an aperture having an area of at least 0.5 cm².

The circumferential belt layer 140, i.e., a reinforcing belt, is typically electrically conductive. The circumferential belt layer 140 can comprise metal. The circumferential belt layer 140 may comprise steel, or it may consist of steel. The circumferential belt layer 140 may be a wire like structure arranged inside the tire 100. The reinforcing structure of the circumferential belt layer 140 may comprise a steel mesh. In addition, or alternatively, the circumferential belt layer 140 may comprise fibrous material. The fibrous material of the circumferential belt layer 140 may comprise at least one of cotton, rayon, polyamide (Nylon), polyester, polyethylene terephthalate, and Poly-paraphenylene terephthalamide (Kevlar).

The circumferential belt layer 140 is typically an electrically conductive layer of the tire. Therefore, it can form a part of the electrically conductive path.

The tire can have a first bead region 151 and a second bead region 152, which bead regions 151, 152 are spaced apart. The first bead region 151 can have a first mounting surface and the second bead region 152 can have a second mounting surface. The mounting surfaces are adapted for mounting the tire on a rim of a wheel. The bead regions may comprise a steel cable coated with rubber. The bead regions have suitable strength to stay seated on the rim of a wheel.

The bead regions can comprise at least one rubber component having a tire mounting surface, for example a chafer and/or toe guard component, which is designed to be rim-contacting, and therefore a mounting surface of the tire.

Such mounting surface rubber composition may comprise e.g. a significant rubber reinforcing carbon black content and can thereby be relatively electrically conductive. Thus, the carbon black-rich rubber composition may make the contact with tire mounting surface, thereby completing the electrical path of reduced electrical resistivity between the tire mounting surface and tire running surface.

The body of the tire 100 is typically made of layers of different fabrics, which are called plies. In this application, the term "ply" refers to a material layer, typically a textile layer, used in the tire. The tire typically comprises several layers of plies. Plies can give strength to the tire and improve a resistance of the tire to road damage. Passenger tires typically have two body plies, truck tires have typically several body plies. The body plies typically run from the first bead region to the second bead region. Ply fabric can be made of e.g. polyester. The plies can be coated with rubber to seal the tire and to bond the layers with each other.

The tire may comprise a carcass ply 155. The carcass ply 155 can improve the strength of the tire, particularly in the sidewall areas 145. The carcass ply 155 may be a rubber-coated fabric. The carcass ply(ies) typically extend(s) from the first bead region to the second bead region.

The carcass ply/plies 155 may comprise fibrous material. The fibrous material of the carcass ply 155 may comprise:
- cotton, and/or
- rayon, and/or
- polyamide (nylon), and/or
- polyester, and/or
- polyethylene terephthalate, and/or
- poly-paraphenylene terephthalamide (Kevlar).
The purpose of the carcass ply 155 can be to reinforce the tire 100, hence, the carcass ply 155 can give strength to the tire.

The tire 100 can further comprise sidewalls 145. The sidewalls of the tire can be used to protect the side of the tire e.g. from the road. The visible tire sidewalls 145 can be of a rubber composition. The sidewalls 145 can comprise a rubber composition, which can be relatively electrically nonconductive. Thus, the outer sidewalls of the tire 100 can be relatively electrically nonconductive. In the case of the relatively electrically nonconductive material of the outer sidewall, hysteresis of the tire 100 can be reduced, hence, the tire 100 can be less hysteretic. A lower hysteretic outer tire sidewall 145 can cause a lower rolling resistance for the tire with an associated beneficial increase in fuel economy for a vehicle and durability of the tire itself. Alternatively, the sidewalls 145 may comprise a rubber composition, which can be relatively electrically conductive. Strength may further be improved with wing layers.

The tire may further comprise an inner liner 135, which is typically an airtight layer of rubber.

As discussed, the tread 120 comprises the electrically conductive tread portion 10. The tire tread 120 having the running surface may mostly be relatively electrically nonconductive. However, the electrically conductive tread portion 10 may provide a path of reduced electrical resistivity extending to the outer running surface of said tread layer. Said electrically conductive tread portion 10 can be positioned through the tread 120 as illustrated in Figs 3a-4f.

Thus, the tire may comprise an electrical path of least electrical resistance, which can extend, thanks to the electrically conductive tread portion 10, from the bead region of the tire 100 to the running surface 900 of the tread 120. Therefore, the electrically conductive path may be formed between the rim of the wheel and the surface 900 of a road.

The rubber compositions of the tire bead region 151, 152 can provide a mounting surface of the tire where said mounting surface is adapted to contact a metal rim to form a tire - rim assembly. For example, a tire chafer and toe guard may be used to provide a tire mounting surface for mounting the tire on the metal rim. The rubber composition of the tire bead region 151, 152 can be relatively electrically conductive. Further, a rubber of the belt layer 140 can also have a relatively high electrical conductivity.

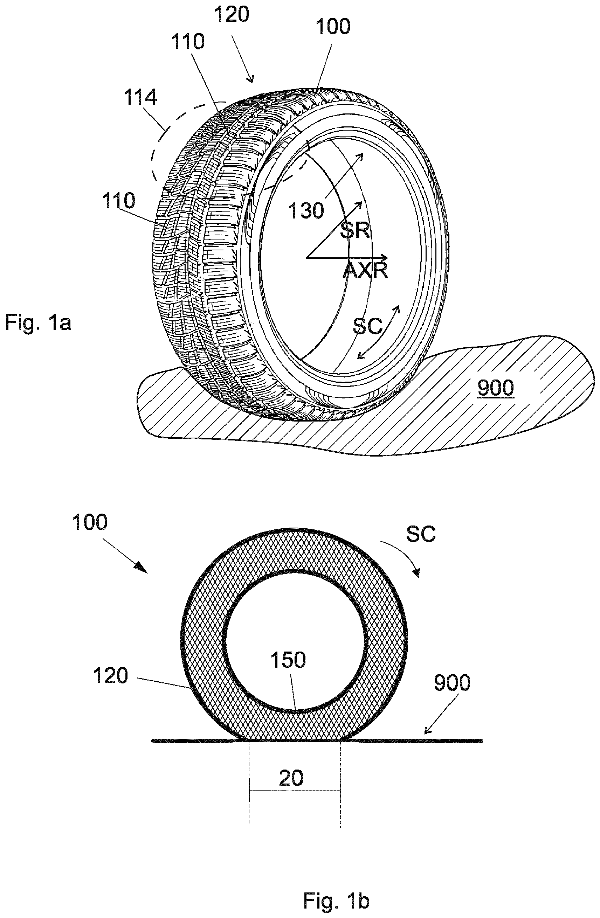

Figures 1a to 4f illustrate some examples of a tire comprising the electrically conductive tread portion 10.

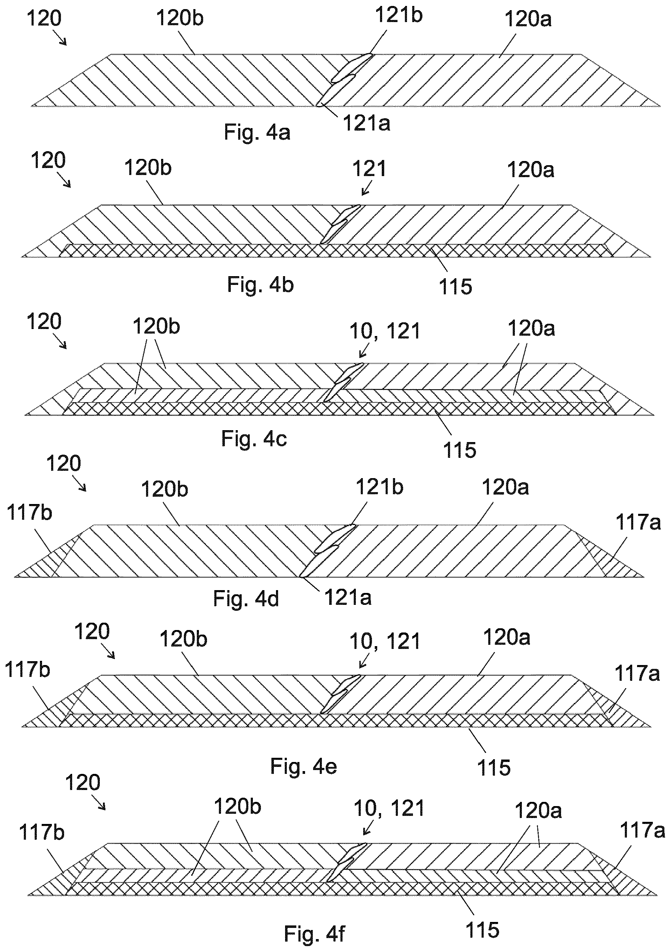

Figs 3c, 3f, 4c and 4f show some embodiments wherein electrically low conductive tread portions comprises two material layers. The first electrically conductive rubber layer 115 is not shown in Figs 3a, 3d, 4a and 4d.

Figs 4a to 4f illustrates some embodiments wherein the electrically conductive tread portion 10 is formed of two layers of a rubber strip.

As discussed above, the tire may comprise
- a circumferential tread 120 which is being configured to form a contact with a ground contacting surface 900 when the tire 100 is used,
- a circumferential belt layer 140 disposed radially below the tread 120,
- a first bead region 151 and a second bead region 152, which bead regions are spaced apart, wherein the first bead region 151 has a first mounting surface and the second bead region 152 has a second mounting surface, which mounting surfaces are adapted for mounting the tire on a rim of a wheel,
- a first sidewall 145a, which may extend between the first bead region 151 and the tread 120,
- a second sidewall 145b, which may extend between the second bead region 152 and the tread 120, and
- a carcass ply 155 extending between the first bead region 151 and the second bead region 152.

The tire may comprise the first electrically conductive rubber layer 115. The first electrically conductive rubber layer 115 may be a circumferential layer of the tread 120, disposed below the tread portions, i.e., the first electrically low conductive tread portion 120a, the second electrically low conductive tread portion 120b, and the electrically conductive tread portion 10.

The first electrically conductive rubber layer 115 may be disposed radially outside the belt layer.

The first electrically conductive rubber layer 115 can comprise and/or be made of electrically conductive rubber material. The first electrically conductive rubber layer 115 may be formed during a manufacturing process of the tire, after which the surface tread portions can be wound onto the first electrically conductive rubber layer 115.

Referring to Figs 4b, 4c, 4e, and 4f, the electrically conductive tread portion can be positioned on the first electrically conductive rubber layer 115 so that the electrically conductive tread portion extends from the first electrically conductive rubber layer 115 to the ground contacting surface of the tread. Preferably, the electrically conductive tread portion 10 is formed by using more than one layer of the electrically conductive rubber strip. Most preferably, the electrically conductive tread portion (10) is formed by using 2 to 4 layers of the electrically conductive rubber strip.

The first electrically conductive rubber layer 115 may comprise only one layer.

The first electrically conductive rubber layer 115 may comprise or consist of one or two of the following:
- a base rubber layer,
- a breaker rubber layer,
- a tread under-cushion rubber layer, and
- a capstrip rubber layer.
Thus, in an embodiment, the first electrically conductive rubber layer 115 is one of the following:
- base rubber layer,
- breaker rubber layer,
- tread under-cushion rubber layer, and
- capstrip rubber layer.
In an embodiment, the first electrically conductive rubber layer 115 consists of the base rubber layer or the capstrip rubber layer.

In an embodiment, the first electrically conductive rubber layer 115 comprises or consists of the base rubber layer.

In an embodiment, the first electrically conductive rubber layer 115 comprises or consists of the capstrip rubber layer.

Thus, the tread 120 can comprise the first electrically conductive rubber layer 115 comprising electrically conductive rubber material.

In an embodiment, the first electrically conductive rubber layer 115 is made of a first rubber material, and the electrically conductive tread portion 10 is made of a second rubber material, and the first rubber material differs from the second rubber material. Thus, it is possible to optimize properties of the tire. Typically, the material used for the first electrically conductive rubber layer is not optimal material for the electrically conductive tread portion.

The tread comprises at least one, and preferably only one, electrically conductive tread portion 10. Thus, it is possible to provide improved conductivity through the tread cost efficiently. The electrically conductive tread portion 10 can extend from the first electrically conductive rubber layer 115 to the ground contacting surface of the tread.

The tread 120 can comprise the first low conductive tread portion 120a extending from the first electrically conductive rubber layer 115 to the ground contacting surface of the tread, and the second low conductive tread portion 120b extending from the first electrically conductive rubber layer 115 to the ground contacting surface of the tread.

The electrically low conductive tread portions 120a, 120b may comprise only one material layer, or more than one material layer.

The first electrically low conductive tread portion 120a may comprise only one material layer. Further, the second electrically low conductive tread portion may comprise only one material layer. Electrically low conductive tread portions having only one material layer are illustrated e.g. in Figs 3a, 3b, 3d and 3e, and in Figs 4a, 4b, 4d and 4e.

In an embodiment, the first electrically low conductive tread portion and the second electrically low conductive tread portion may comprise two material layers as shown in Figs 3c, 3f, 4c, and 3f. In this embodiment, said two material layers may be made of different electrically low conductive materials.

Thus, the electrically low conductive tread portions may comprise only one or only two material layers.

The electrically conductive tread portion 10 can be positioned directly on the first electrically conductive rubber layer 115, preferably laterally between the first low conductive tread portion 120a and the second low conductive tread portion 120b.

Thanks to the electrically conductive tread portion 10, a resistance through the whole tire (from the bead region to the ground contacting surface), can be substantially low. The smaller the resistance, the better for the tire. Thanks to the electrically conductive tread portion, a very small resistance of the tread of the tire, can be obtained. The resistance of the tread can depend on e.g. the width of electrically conductive tread portion, properties of the first electrically conductive rubber layer, and a winding style of the electrically conductive strip.

The tire can comprise only one or more than one electrically conductive tread portion 10, e.g., from 1 to 2 electrically conductive tread portions 10.

Preferably, the tire comprises only one electrically conductive tread portion. In an embodiment, the tire comprises only two electrically conductive tread portions. Advantageously, the tire comprises equal to or less than two electrically conductive tread portion(s) for easy and cost-effective manufacturing process of the tire.

The electrically conductive tread portion 10 may be in a form of a strip, such as an electrically conductive rubber strip, extending through a relatively electrically nonconductive tread, which strip have an increased electrical conductivity. Preferably, the electrically conductive tread portion 10 is formed by using at least two layers of an electrically conductive rubber strip 121. Technical effect is to obtain easy and cost-effective manufacturing process of the tire together with small resistance through the tread.

The electrically conductive tread portion 10 can be formed by winding 1 to 4 layers of an electrically conductive rubber strip 121. Preferably, the electrically conductive tread portion 10 is formed by winding at least 2, and equal to or less than 3 layers of the electrically conductive rubber strip 121. Most preferably, the electrically conductive tread portion 10 is formed by winding exactly two layers of the electrically conductive rubber strip 121. The technical effect is to obtain easy and cost-effective manufacturing process of the tire together with small resistance through the tread. The electrically conductive tread portion 10 can provide a path of least electrical resistance through the tread.

The electrically conductive tread portion 10 can have a width w10 (shown in Fig. 3e) in a range between 0.2 mm and 8 mm, or in a range between 0.4 mm and 6 mm. The electrically conductive tread portion may have a width equal to or less than 7 mm, preferably equal to or less than 6 mm, more preferably equal to or less than 5 mm and most preferably equal to or less than 4 mm. The tread portion having said width may not break easily, nor affect too much other properties of the tire. Further, the electrically conductive tread portion can have a width equal to or more than 0.2 mm, preferably equal to or more than 0.4 mm, more preferably equal to or more than 0.6 mm and most preferably equal to or more than 0.8 mm. Therefore, the electrically conductive tread portion can have a width which can maintain suitable properties. The width of the electrically conductive tread portion can influence the electrical conductivity of the tread portion. The width of the electrically conductive tread portion 10 can be determined from the surface of the tread, parallel to the width of the tire. Further, a width of the electrically conductive tread portion may vary, for example, depending on the manufacturing process of the tire. However, a minimum width of the electrically conductive tread portion may be at least 0.2 mm, preferably at least 0.4 mm, and more preferably at least 0.8 mm, and most preferably at least 1 mm, and maximum width of the electrically conductive tread portion may be equal to or less than 8 mm, preferably equal to or less than 6 mm, and most preferably equal to or less than 5 mm.

In an embodiment, the electrically conductive tread portion has a width in a range between 0.8 mm and 6 mm. This can improve some properties of the electrically conductive tread portion, such as providing suitable strength properties as well as good electrical conductivity for the electrically conductive tread portion.

The electrically conductive tread portion 10 has a first length 110 (shown in Fig. 3d), determined from the bottom of the electrically conductive tread portion 10 to the surface of the electrically conductive tread portion 10, i.e., from the first electrically conductive rubber layer 115 to the ground contacting surface of the tread. The first length 110 of the electrically conductive tread portion 10 may be equal to or more than 7.5 mm, preferably equal to or more than 8 mm, more preferably equal to or more than 9 mm, and most preferably equal to or more than 10 mm. Further, the electrically conductive tread portion 10 may have the first maximum length determined from the bottom of the electrically conductive tread portion 10 to the surface of the electrically conductive tread portion 10, which first maximum length depends on a type of the tire. In an embodiment, the first maximum length l10 is equal to or less than 80 mm, preferably equal to or less than 60 mm, more preferably equal to or less than 45 mm, and most preferably equal to or less than 35 mm.

The first length may depend on a structure of the tread, a type of the tire, as well as a position (an angle) of the electrically conductive tread portion in the tread.

The electrically conductive tread portion 10 may be positioned to a normal direction, or substantially to a normal direction, with respect to the surface of the tread.

The electrically conductive tread portion 10 may have an angle β (illustrated in Fig. 3d) between 5° and 90° with respect to the surface of the tread. The angle β with respect to the surface of the tread is preferably at least 10°, more preferably at least 15°, and most preferably at least 20°. Further, in order to improve easiness of the manufacturing process, the angle β with respect to the surface of the tread is preferably equal to or less than 80°, more preferably equal to or less than 70°, and most preferably equal to or less than 60°.

In an embodiment, the electrically conductive tread portion 10 may have an angle α between 0° and 80° with respect to the normal direction. In this embodiment, the angle α (shown in Fig.3a) of the electrically conductive tread portion 10 is preferably at least 10° with respect to the normal direction, and more preferably at least 20° with respect to the normal direction. The technical effect is to improve manufacturing process of a tread having the electrically conductive tread portion that is formed by winding a rubber strip.

The electrically conductive tread portion 10 may comprise styrene butadiene rubber (SBR), and/or butadiene rubber (BR), and/or natural rubber (NR) so that total amount of these materials is equal to or more than 15 wt.%, more preferably equal to or more than 25 wt.%, and most preferably equal to or more than 40 wt.%, calculated from the total weight of the electrically conductive tread portion 10. The rubber composition of the electrically conductive tread portion 10 may further comprise a rubber reinforcing carbon black. The technical effect of rubber reinforcing carbon black is to improve electrical conductivity of a rubber material.

The electrically conductive rubber strip 121, 121a, 121b is, before a vulcanizing step, an uncured electrically conductive rubber strip. The uncured electrically conductive rubber strip is preferably a continuous body having a thickness and a width. The thickness can be perpendicular to the width. The thickness and the width can be perpendicular to the (continuous) length of the uncured electrically conductive rubber strip 121, 121a, 121b.

The electrically conductive tread portion 10 can be formed by winding at least one layer, preferably two or more than two layers and equal to or less than four layers, of the electrically conductive rubber strip 121a, 121b.

Each layer of the electrically conductive rubber strip 121, excluding the first layer 121a, is preferably overlapping a previous layer so that an overlapped width is equal to or less than 50 %, more preferably equal to or less than 40%, and most preferably equal to or less than 30%, determined from a width of the overlapped electrically conductive rubber strip 121. Further, said overlapped width may be equal to or more than 1%, preferably equal to or more than 5%, and more preferably equal to or more than 10%, and most preferably equal to or more than 15%, determined from a width of the overlapped electrically conductive rubber strip 121. Thus, the electrically conductive tread portion may have greatest thickness in the middle of the first length of the electrically conductive tread portion due to the overlapped area of the rubber strip. Thanks to this embodiment, width of the rubber strip can be decreased, which can decrease manufacturing costs of the electrically conductive tread portion. Further, the electrically conductive tread portion can be thin but still reliable in use.

Therefore, as discussed, the electrically conductive tread portion 10 may be made of (at least) two layers of the electrically conductive rubber strip 121, wherein a second layer 121b of the rubber strip 121 is overlapping the first layer 121a of the rubber strip 121 so that an overlapped width is equal to or less than 50 %, more preferably equal to or less than 40%, and most preferably equal to or less than 35%, determined from a width of the first layer 121a of the rubber strip 121. Further, in this embodiment, said overlapped width is preferably equal to or more than 5%, more preferably equal to or more than 10%, and most preferably equal to or more than 15%, determined from a width of the first layer 121a of the rubber strip 121. This is illustrated in Figs 4a-f.

The electrically conductive rubber strip 121 is preferably one component strip, i.e., preferably, it is not e.g. a hybrid strip having adjacent portions made of different materials. Thus, the electrically conductive rubber strip preferably consists of the same composition through the whole thickness and width of the strip. Thus, the electrically conductive tread portion 10 preferably consists of the same material(s) through the whole thickness, length, and width of the electrically conductive tread portion 10. The technical effect is to improve controllability and predictability of the electrically low conductive tread portion.

In an embodiment, the uncured electrically conductive rubber strip 121 may have a thickness of equal to or more than 0.2 mm, preferably equal to or more than 0.3 mm, more preferably equal to or more than 0.4 mm, and most preferably equal to or more than 0.5 mm. Further, the uncured electrically conductive rubber strip 121 may have a thickness of equal to or less than 5 mm, preferably equal to or less than 4 mm, more preferably equal to or less than 3 mm, and most preferably equal to or less than 2.5 mm. In an advantageous embodiment, the uncured electrically conductive rubber strip 121 is a continuous body having a thickness in a range between 0.4 mm and 2.5 mm. The technical effect is that adjustability of the electrically conductive tread portion can be improved, and conductivity of the electrically conductive tread portion can be controlled. Further, by using said thickness, manufacturing costs of the electrically conductive tread portion may be decreased. Further, some properties of the tread can be improved by using this kind of solution. For example, the electrically conductive tread portion can be thin but still reliable in use. Still further, a thickness, a position, an elasticity, and a conductivity of the electrically conductive tread portion can be controlled due to this embodiment. The thickness of the electrically conductive rubber strip can be smaller than the width of the electrically conductive rubber strip.

The uncured electrically conductive rubber strip 121 may preferably have a shape that is one of:
- irregular quadrilateral, which may have rounded edges,
- quadrilateral having at least one pair of parallel sides, which may have rounded edges,
- parallelogram, which may have rounded edges, and
- rhombus, which may have rounded edges.
Technical effects of said shapes include improved processability, and easiness of manufacturing process.

The method for producing a tread 120 of a pneumatic tire 100 may comprise a step of
- form ing a first electrically conductive rubber layer 115, the first electrically conductive rubber layer 115 comprising electrically conductive rubber material.
The first electrically conductive rubber layer 115 may be selected from the materials discussed in this application. The first electrically conductive rubber layer 115 may be disposed radially outside the belt layer 140.

The low conductive tread portions can be formed by using uncured low conductive rubber strips. The uncured low conductive rubber strip is preferably a continuous body having a thickness and a width. The thickness, shape and width of the uncured low conductive rubber strips may or may not be similar with the width and the thickness of the uncured electrically conductive rubber strip.

The method may further comprise a step of:
- winding first uncured electrically low conductive rubber strip(s) on a circumference of the first electrically conductive rubber layer 115 on a first area so that the formed first uncured electrically low conductive tread portion extends from the first electrically conductive rubber layer 115 to the ground contacting surface of the tread.
Therefore, first uncured low conductive tread portion may be formed. The first uncured electrically low conductive rubber strip may be wound directly on the first electrically conductive rubber layer. The first uncured electrically low conductive tread portion may be made of one material layer as shown e.g. in Fig 4b, or two material layers as shown e.g. in Fig. 4c.

The method may further comprise the following step:
- winding second uncured electrically low conductive rubber strip(s) on a circumference of the first electrically conductive rubber layer 115 on a third area so that the second uncured electrically low conductive tread portion extends from the first electrically conductive rubber layer 115 to the ground contacting surface of the tread.
Therefore, the second uncured low conductive tread portion may be formed. The second uncured electrically low conductive rubber strip may be wound directly on the first electrically conductive rubber layer. The second uncured electrically low conductive tread portion may be made of one kind of material layer as shown e.g. in Fig 4b, or two kinds of material layers as shown e.g. in Fig. 4c.

The method may further comprise the following step:
- winding an uncured electrically conductive rubber strip 121 on a circumference of the first electrically conductive rubber layer 115 in order to form uncured electrically conductive tread portion extending to the ground contacting surface of the tread, which uncured electrically conductive tread portion comprises one or more than one layer of the uncured electrically conductive rubber strip.
Therefore, uncured electrically conductive tread portion may be positioned on the first electrically conductive rubber layer 115. The uncured electrically conductive tread portion 10 can comprise one or more than one layer of the electrically conductive rubber strip, preferably 2 to 4 layers. Said one or more than one layer of the uncured electrically conductive rubber strip 121 can be wound so that the electrically conductive tread portion 10 has a predetermined shape.

The electrically conductive tread portion 10 can be positioned laterally between the first and the second low conductive tread portions. At least part of the uncured electrically conductive rubber strip 121, before vulcanizing, may be at least partly directly in contact with the first and second low conductive tread portions 120a, 120b, wherein the uncured electrically conductive tread portion extends from the first electrically conductive rubber layer 115 to the ground contacting surface of the tread.

After the first and second uncured low conductive tread portions and the uncured electrically conductive tread portion are formed, the method may comprise the following step:
- vulcanizing the windings,
thereby obtaining the tread 120 of the pneumatic tire comprising the electrically conductive tread portion 10.

The formed electrically conductive tread portion 10 can have a width w10 in a range between 0.2 mm and 8 mm, preferably in a range between 0.4 mm and 7 mm, more preferably in a range between 0.6 mm and 6 mm, and most preferably in a range between 1 mm and 5 mm. The electrically conductive tread portion 10 is preferably substantially thin. Thus, it is possible to improve conductivity through the tread without affecting too much other properties of the tire. The width w10 of the electrically conductive tread portion is shown, e.g. in Fig 3e. The width w10 of the electrically conductive tread portion is determined as average width of said portion.

The tire may further comprise wing layers 117a, 117b, which are connected to the sidewalls. In an embodiment, the tire comprises two wing layers 117a, 117b. In this embodiment, a first wing layer 117a may be connected to a first sidewall of the tire, and a second wing layer 117b may be connected to a second sidewall of the tire. Thanks to the wing layers, some strength properties as well as handling properties of the tire may be improved.

The vulcanization of the tire comprising the electrically conductive tread portion 10 can be conducted by methods known to a person skilled in the art.

### EXAMPLE 1

Tires having electrically conductive tread portion were prepared. These tires were compared to similar tires without the electrically conductive tread portion.

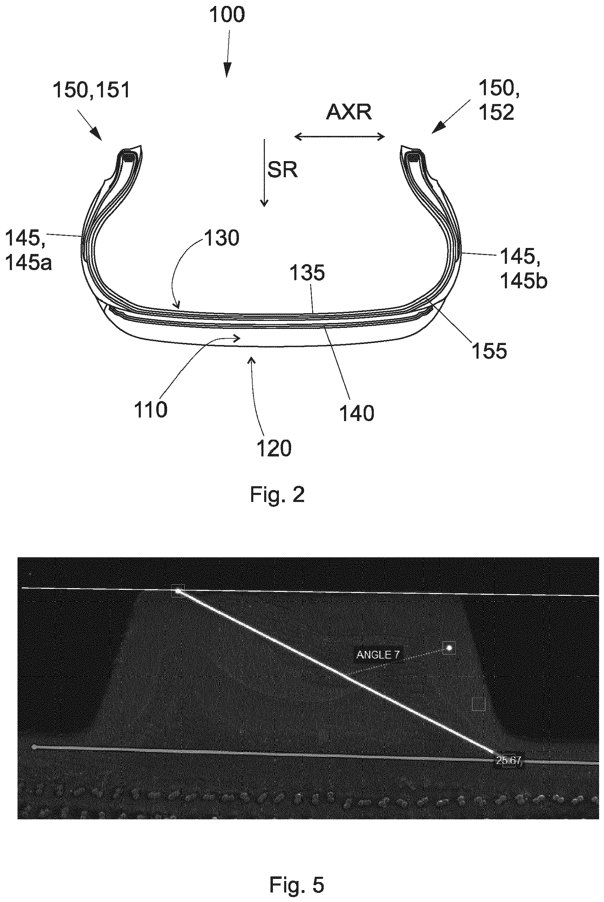

A part of a tread having the electrically conductive tread portion is shown in Fig. 5. Further, an angle illustrating a position of the electrically conductive tread portion is added to this Figure.

Conductivity was determined according to standard WDK110 by using electric potential of 500 V. The tires having the electrically conductive tread portion had suitable conductivity at 500 V, as shown in Table 1. Similar tires without the electrically conductive tread portion did not have the similar suitable conductivity through the tread layer.

**Table 1**

| **NO** | **TIRE** | **Results** | | | **V** |
|---|---|---|---|---|---|
| 1 | 205/55R16 | 353 MΩ | 390 MΩ | 451 MΩ | 500 |

Further, bead to bead electrical conductivity was determined, wherein, at a temperature of 23.4°C with a humidity of 19.4 %, and by using a voltage of 100 V, measured resistance was 69 MΩ. With a voltage of 500 V, measured bead to bead resistance was 374 MΩ at a temperature of 23.4°C with a humidity of 19.4 %. Similar tires without the electrically conductive tread portion did not have the similar suitable conductivity.

The invention has been described with the aid of illustrations and examples. The invention is not limited solely to the above presented embodiments but may be modified within the scope of the appended claims.

## Claims

1. A method for producing a tread (120) of a pneumatic tire (100), the pneumatic tire (100) comprising a first sidewall (145a), and a second sidewall (145b),
wherein the tread has a ground contacting surface formed of tread portions (120a, 120b, 10), and the method comprises:
- forming a first electrically conductive rubber layer (115), the first electrically conductive rubber layer (115) comprising first electrically conductive rubber material,
- winding a first uncured electrically low conductive rubber strip on a first area of the first electrically conductive rubber layer (115) in order to form at least part of a first uncured electrically low conductive tread portion,
- winding an uncured electrically conductive rubber strip (121) on a second area of the first electrically conductive rubber layer (115) in order to form an uncured electrically conductive tread portion, which extends to the ground contacting surface of the tread, which uncured electrically conductive tread portion comprises one or more than one layer of the uncured electrically conductive rubber strip,
- winding a second uncured electrically low conductive rubber strip on a third area of the first electrically conductive rubber layer (115) in order to form at least part of a second uncured electrically low conductive tread portion, and
- vulcanizing said windings,
thereby obtaining the tread (120) of the pneumatic tire, the tread (120)
comprising the electrically conductive tread portion (10), the first low conductive tread portion (120a), and the second low conductive tread portion (120b).

2. The method according to claim 1, wherein the electrically conductive tread portion (10) is formed by winding at least two layers of the uncured electrically conductive rubber strip (121), wherein each layer on top of previous layer is overlapping said previous layer so that an overlapped width is equal to or less than 50 %, calculated from a width of the electrically conductive rubber strip (121).

3. The method according to any of the preceding claims, wherein the uncured electrically conductive rubber strip (121) is a continuous body having a width in a range between 4 mm and 50 mm, preferably in a range between 7 mm and 35 mm.

4. The method according to any of the preceding claims, wherein the uncured electrically conductive rubber strip (121) has a thickness in a range between 0.2 mm and 5 mm, preferably in a range between 0.4 mm and 4.5 mm.

5. The method according to any of the preceding claims, wherein a shape of the uncured electrically conductive rubber strip (121) is one of:
- quadrilateral having at least one pair of parallel sides,
- parallelogram,
- rhombus,
- pentagon, and
- hexagon.

6. A pneumatic tire (100) comprising a tread (120) having a ground contacting surface, the tread comprising an electrically conductive tread portion (10), a first electrically low conductive tread portion (120a), and a second electrically low conductive tread portion (120b),
wherein
- a first electrically conductive rubber layer (115) is disposed radially below the tread portions (120a, 120b, 10), the first electrically conductive rubber layer (115) comprising first electrically conductive rubber material,
- the first electrically low conductive tread portion (120a) extends from the first electrically conductive rubber layer (115) to the ground contacting surface of the tread, form ing a first part of the ground contacting surface,
- the electrically conductive tread portion (10) extends from the first electrically conductive rubber layer (115) to the ground contacting surface of the tread, forming a second part of the ground contacting surface, and
- the second low conductive tread portion (120b) extends from the first electrically conductive rubber layer (115) to the ground contacting surface of the tread, forming a third part of the ground contacting surface.

7. The pneumatic tire according to claim 6, or the method according to any of the preceding claims 1 to 5, wherein the electrically conductive tread portion (10) has a width (w10) in a range between 0.2 mm and 8 mm, preferably in a range between 0.8 mm and 6 mm, measured from the ground contacting surface of the tread, parallel to a width of the tire.

8. The pneumatic tire according to claim 6 or 7, or the method according to any of the preceding claims 1 to 5, wherein
- the electrically conductive tread portion (10) is made of a second electrically conductive rubber material, and
- the first electrically conductive rubber material differs from the second electrically conductive rubber material.

9. The pneumatic tire according to any of the preceding claims 6 to 8, or the method according to any of the preceding claims 1 to 5, wherein the first electrically conductive rubber layer (115) is one of the following:
- a base rubber layer,
- a breaker rubber layer,
- a tread under-cushion rubber, and
- a capstrip rubber layer.

10. The pneumatic tire according to any of the preceding claims 6 to 9, or the method according to any of the preceding claims 1 to 5, wherein the electrically conductive tread portion (10) comprises a carbon black, the carbon black having an oil absorption number (OAN) in a range between 70 ml/100 g and 120 ml/100 g, determined according to standard ASTM D2414-09.

11. The pneumatic tire according to any of the preceding claims 6 to 10, or the method according to any of the preceding claims 1 to 5, wherein the electrically conductive tread portion (10) comprises carbon black having a specific surface area value of at least 70 m²/g, for example in a range between 70 m²/g and 100 m²/g, determined according to standard ASTM D6556-10.

12. The pneumatic tire according to any of the preceding claims 6 to 11, or the method according to any of the preceding claims 1 to 5, wherein the tire further comprises a first wing layer (117a) connected to the first sidewall, and a second wing layer (117b) connected to the second sidewall.

13. The pneumatic tire according to any of the preceding claims 6 to 12, or the method according to any of the preceding claims 1 to 5, wherein the electrically conductive tread portion (10) is positioned so that an angle with respect to a surface of the tread is in a range between 5° and 90°, preferably in a range between 10° and 80°.

14. The pneumatic tire according to any of the preceding claims 6 to 13, or the method according to any of the preceding claims 1 to 5, wherein the electrically conductive tread portion covers from 0.05% to 8% of a surface area of the tread.

15. The pneumatic tire according to any of the preceding claims 6 to 14, or the method according to any of the preceding claims 1 to 5, wherein the electrically conductive tread portion (10) is formed by using 2 to 4 layers of an/the electrically conductive rubber strip.
